(19) Europäisches Patentamt
European Patent Office
Office européen des brevets

(11) Numéro de publication : **0 277 075 B1**

(12) **FASCICULE DE BREVET EUROPEEN**

(45) Date de publication du fascicule du brevet :
**01.04.92 Bulletin 92/14**

(51) Int. Cl.⁵ : **H05B 6/12, H05B 3/74**

(21) Numéro de dépôt : **88420008.0**

(22) Date de dépôt : **12.01.88**

(54) **Plan de cuisson électrique à chauffage à induction.**

(30) Priorité : **13.01.87 FR 8700420**

(43) Date de publication de la demande :
**03.08.88 Bulletin 88/31**

(45) Mention de la délivrance du brevet :
**01.04.92 Bulletin 92/14**

(84) Etats contractants désignés :
**BE CH DE GB LI NL**

(56) Documents cités :
**FR-A- 2 315 819**
**FR-A- 2 373 939**
**US-A- 3 406 279**
**US-A- 3 843 857**
**US-A- 4 092 511**
**US-A- 4 453 067**

(73) Titulaire : **CABLECO Société Anonyme**
**13, Chemin des Acacias**
**F-69130 Ecully (FR)**

(72) Inventeur : **Poumey, Michel**
**13 chemin des Acacias**
**F-69130 Ecully (FR)**

(74) Mandataire : **Laurent, Michel et al**
**Cabinet LAURENT et CHARRAS, 20, rue Louis**
**Chirpaz B.P. 32**
**F-69131 Ecully Cedex (FR)**

Jouve, 18, rue Saint-Denis, 75001 PARIS

## Description

La présente invention concerne un perfectionnement apporté aux foyers de cuisson pour appareils à chauffage électrique par induction, tels que ceux qui font l'objet du brevet US-A-4 092 511 (ou US-A-4 029 926), et dont la plaque support est à base de vitrocéramique (US-A-3 406 279).

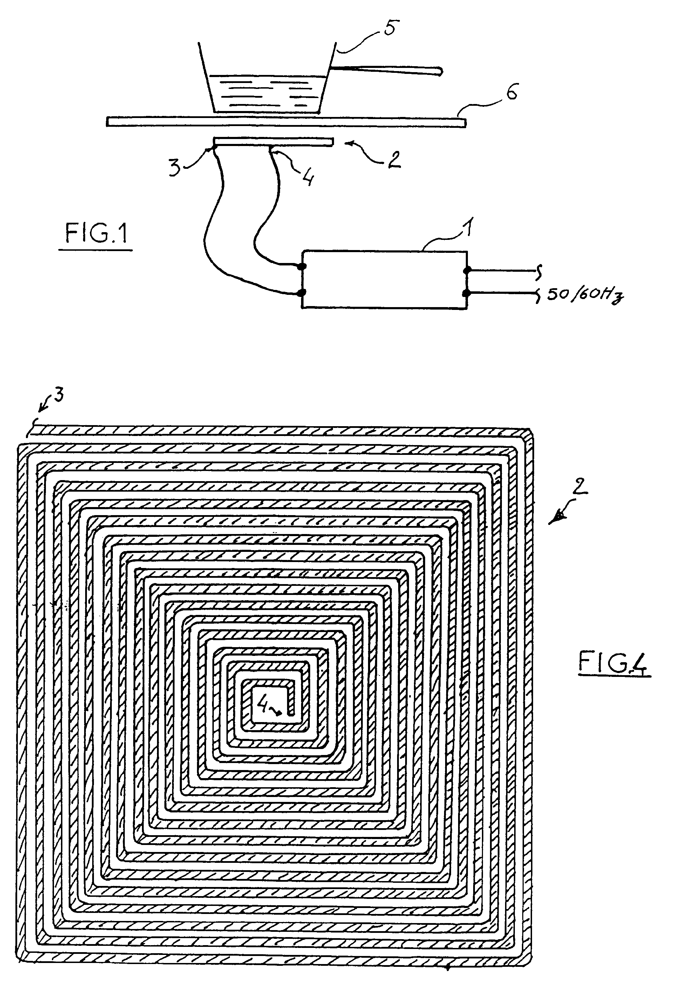

Les foyers de cuisson à chauffage par induction sont connus depuis fort longtemps et se composent, ainsi que cela ressort de la figure 1 annexée, d'un convertisseur (1) (ou générateur) alimenté par le secteur 220 volts, 50 Hz ou 60 Hz et donnant dans une self (2) (ou inducteur) un courant à la fréquence de 25 à 30 kHz. L'inducteur (2) est en général constitué par un bobinage en spirale plane d'une "tresse" à base de brins de cuivre isolés, les sorties (3,4) étant reliées au générateur (1).

De tels foyers permettent une chauffe rapide d'ustensiles métalliques (5) disposés sur une plaque (6) intercalée entre l'inducteur (2) et le fond desdits ustensiles (5). Le champ électromagnétique crée par le passage du courant haute fréquence produit par le convertisseur génère des courant de Foucault dans le fond métallique des ustensiles permettant la chauffe. En général, lorsque le plan de cuisson comporte plusieurs zones de cuisson, plusieurs inducteurs sont utilisés, chaque inducteur déterminant un feu ou foyer.

Il a par ailleurs été proposé, ainsi que cela ressort notamment du FR-A-2 373 939 et de l'US-A-3 843 857 de réaliser des inducteurs dans lesquels le bobinage est réalisé à spires non jointives et ce, de telle sorte que la spirale plane obtenue ait une forme rectangulaire (ou carrée) dont la surface correspond sensiblement à la surface totale de l'appareil et permet ainsi de chauffer éventuellement une pluralité d'ustensiles et d'obtenir une puissance de chauffe plus importante dans la zone centrale qu'à la périphérie.

Dans les solutions proposées à ce jour pour réaliser le plan de cuisson proprement dit, on utilise comme plaque support (6) des plaques en matériau non métallique, en général à base de vitrocéramique. Si un tel matériau présente de très bonnes caractéristiques pour une telle application (perméabilité au rayonnement de 25 à 30 kHz, résistance à l'abrasion, résistance aux chocs thermiques...), en revanche, de telles plaques (6) sont opaques (noires ou blanches), ce qui nécessite de signaler la position de l'inducteur rond par sérigraphie sur la face supérieure de cette plaque. Un tel marquage arrive à s'effacer par abrasion lors du nettoyage de la face supérieure ainsi que du fait des frottements exercés par les ustensiles de cuisine lorsqu'on les déplace.

De plus, la décoration de la surface supérieure de la plaque en vitrocéramique est très délicate et coûteuse à réaliser compte-tenu des températures élevées auxquelles se trouve portée cette face qui est en contact direct avec le fond des ustensiles. En général, pour réaliser un décor sur cette face supérieure, il est nécessaire de faire appel à des émaux, qui non seulement doivent être appliqués en surface sous la forme de petits points espacés les uns des autres pour résoudre les problèmes de dilatation pouvant entraîner une détérioration du décor (étant donné que le coefficient de dilatation de la vitrocéramique est différent de celui des émaux), mais également implique une cuisson complémentaire pour assurer la fixation de ce décor.

Par ailleurs, la vitrocéramique présente une relative fragilité en ce qui concerne les chocs et, pour limiter ce risque, ces plaques (6) ont une épaisseur surdimensionnée.

Par ailleurs, d'un point de vue électrique, la sécurité n'est pas absolue attendu que de telles plaques peuvent se fendre, ce qui présente des risques s'il se produit des infiltrations de liquide.

Enfin, dans de tels plans de cuisson, se pose également le problème du maintien et positionnement de l'inducteur par rapport à la plaque support métallique. Une solution consiste, ainsi que cela ressort de l'US-A-3 843 857 (voir figure 2), à noyer l'inducteur dans l'épaisseur même de la plaque support, ce qui d'un point de vue réalisation est complexe et conduit également à avoir des plaques support de très grande épaisseur.

Or on a trouvé, et c'est ce qui fait l'objet de la présente invention, un perfectionnement apporté à de tels plans de cuisson électrique à chauffage à induction qui permet de résoudre l'ensemble de ces problèmes.

D'une manière générale, l'invention concerne donc un plan de cuisson électrique pour appareil à chauffage à induction, constitué d'une plaque servant de support à des ustensiles métalliques, ladite plaque étant en matériau non métallique, et montée sur un support isolant qui comporte un logement à l'intérieur duquel est disposé un inducteur relié à un convertisseur adapté pour être raccordé au secteur 220 volts 50 Hz ou 60 Hz et qui délivre dans ledit inducteur un courant à la fréquence de 25 à 30 kHz, ledit inducteur étant constitué par un bobinage à spirales planes d'une tresse à base de brins de cuivre isolés et dont les sorties sont reliées au convertisseur (1), caractérisé en ce que :

– la plaque servant de support aux ustensiles est à base d'une vitrocéramique transparente et a les mêmes dimensions que le support isolant, le support isolant comportant plusieurs logements si le plan comporte plusieurs inducteurs ;

– entre le support et la plaque, est intercalé un complexe intermédiaire, adapté pour masquer l'intérieur de l'appareil à la vue de l'utilisateur et pour améliorer par ailleurs la sécurité dans le cas de bris éventuels de la plaque vitrocéramique ;

– la plaque, le support et le complexe intermédiaire sont disposés à l'intérieur d'un cadre et sont maintenus dans ce dernier par un joint périphérique ;

– les éléments de décoration ou de marquage que comporte le plan de cuisson sont réalisés en dessous de la plaque et sont donc protégés de l'abrasion résultant des nettoyages ou des frottements exercés par les déplacements des ustensiles contre la face supérieure de la vitrocéramique.

Avantageusement et en pratique, dans le plan conforme à l'invention :

– le complexe intermédiaire est constitué d'une feuille de mica recouverte elle-même d'une couche de tissu de verre à mailles serrées, le tissu étant disposé contre la face inférieure de la plaque ;

– les éléments de décor et/ou marquage délimitant l'emplacement du ou des inducteurs sont réalisés directement sur la surface du tissu de verre et/ou sur la face envers de la plaque en regard dudit tissu de verre ;

– le tissu de verre a une maille telle que la lumière produite côté intérieur soit visible à l'extérieur à travers la plaque en vitrocéramique transparente et permettant ainsi un affichage signalant la température ou une puissance absorbée ;

– la plaque support, la feuille de mica, le tissu de verre et la plaque en vitrocéramique sont disposés à l'intérieur d'un cadre et sont maintenus dans ce dernier par l'intermédiaire d'un joint périphérique.

Par ailleurs, le plan de cuisson conforme à l'invention peut comporter soit un seul inducteur à spires non jointives, en forme de spirales planes dont la surface correspond sensiblement à la surface totale de l'appareil, soit une pluralité d'inducteurs définissant chacun un foyer, le maintien des spires de l'inducteur étant obtenu en noyant l'enroulement formé à l'intérieur d'une résine polymérisable, de manière à former des plaques susceptibles d'être encastrées à l'intérieur de l'évidement de la plaque support isolante (ou des évidements si cette plaque support est destinée à recevoir plusieurs inducteurs).

L'invention et les avantages qu'elle apporte seront cependant mieux compris grâce à l'exemple de réalisation donné ci-après, et qui est illustré par les schémas annexées dans lesquels:

– la figure 1 illustre, comme dit précédemment, de manière schématique, la structure et le fonctionnement d'un plan de cuisson à chauffage électrique à induction;

– la figure 2 est une vue en coupe transversale d'un plan de cuisson conforme à l'invention et comportant un inducteur plat de section rectangulaire ou carrée ;

– la figure 3 est une vue de dessus, schématique, de l'appareil illustré à la figure 2 ;

– les figures 4 et 5 sont des vue de dessus de deux formes de réalisation d'un inducteur rectangulaire utilisable pour réaliser un plan de cuisson conforme à l'invention ;

– les figures 6 et 7 sont respectivement des vues de côté et de dessus illustrant la manière dont est réalisé l'inducteur entrant dans la réalisation du plan de cuisson conforme à l'invention.

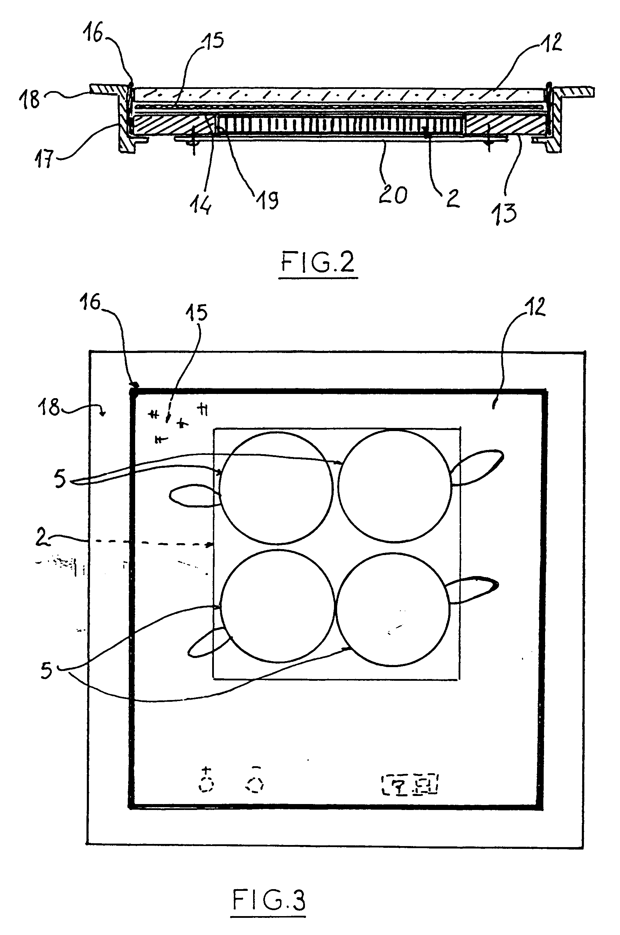

Si l'on se reporte aux schémas annexés et plus particulièrement aux figures 2 et 3, le plan de cuisson électrique à chauffage à induction conforme à l'invention est constitué d'une plaque en vitrocéramique transparente (12) ayant une épaisseur par exemple de quatre à cinq millimètres et qui est posée à plat sur une plaque support (13) en matériau isolant (bois contreplaqué, fibrociment, fibrocéramique, matière plastique) ayant les mêmes dimensions que la plaque en vitrocéramique (12). Conformément à l'invention, entre cette plaque support (13) et la plaque vitrocéramique, est intercalée une feuille de papier mica (14) de 0,25 à 0,5 mm ainsi qu'une couche d'un tissu de verre (15), à mailles serrées, de 0,2 à 0,4 mm d'épaisseur.

L'ensemble est maintenu par un joint (16) (en silicone par exemple) à l'intérieur d'un cadre métallique (17) (ou en matière plastique) servant à la fixation de plans de cuisson ainsi réalisés à l'intérieur d'un boitier pouvant contenir le générateur à induction (non représenté à la figure 2). Eventuellement, le cadre (17) peut comporte un rebord (18) permettant l'encastrement du plan de cuisson sur un plan de travail.

Le support (13) de la plaque vitrocéramique (12) comporte un évidement (19) ayant des dimensions légèrement supérieures à celles de l'inducteur rectangulaire (2 ) (ou carré) et servant de logement à ce dernier. L'inducteur (2 ) est maintenu plaqué contre le papier mica (14) par l'intermédiaire de barrettes isolantes (20) fixées, par vissage par exemple, contre la face inférieure de la plaque support (13).

De l'extérieur (vu de dessus), l'utilisateur ne voit donc que le tissu de verre (15) à travers la plaque vitrocéramique transparente (12).

Ce tissu (15) peut servir d'élément de décoration et être teinté et imprimé afin de présenter un aspect attrayant. Par ailleurs, l'emplacement de l'inducteur peut être dessiné sur la surface visible de ce tissu, ce qui, par rapport aux solutions actuelles dans lesquelles l'emplacement de l'inducteur rond est signalé par sérigraphie sur la surface supérieure de la plaque vitrocéramique, présente de très nombreux avantages étant donné que le marquage n'est pas effaçable par abrasion lors des nettoyages de la face supérieure de la vitrocéramique et lors des déplacements des ustensiles.

Selon une autre alternative, il peut être possible de réaliser le décor non pas en surface du tissu, mais sur la face envers de la plaque en vitrocéramique (12).

Grâce à cette possibilité de décoration en surface du tissu et/ou sur la face envers de la plaque en vitrocéramique, il est possible non seulement d'obtenir une variété de décors et de couleurs quine s'altèrent pas par suite des frottements, mais de tels décors sont beaucoup plus faciles à réaliser que selon les solutions antérieures et demandent moins de précaution étant donné qu'en cours de fonctionnement, ils sont soumis à des températures plus basses qui atteignent au maximum environ 250°C sur la face envers de la plaque (et beaucoup moins en surface du tissu), alors qu'elles peuvent atteindre 450°C ou plus sur la face supérieure en contact direct avec le fond des ustensiles. En conséquence, il peut être envisagé de réaliser des décors complexes, pouvant présenter des surfaces continues, et ce en faisant appel à des techniques conventionnelles d'impression ne nécessitant ni colorant particulier ni traitement thermique de fixation, puisque les problèmes de dilatation, résistance thermique et résistance aux frottements sont pratiquement éliminés.

De plus, la présence de la plaque support (13) et des couches de recouvrement (papier mica (14) et tissu de verre (15)) non seulement améliore la sécurité dans le cas de bris éventuels de la plaque céramique, cette dernière ne pouvant pas s'effondrer, mais il a également été constaté que les risques de bris se trouvaient limités étant donné que ces couches intermédiaires jouaient en quelque sorte le rôle d'amortisseur.

Par ailleurs, le tissu de verre (15) ayant la propriété de laisser passer la lumière, il est donc possible d'incorporer un afficheur numérique lumineux dans une découpe appropriée du support (13) afin, par exemple, de signaler soit une température, soit une valeur correspondante à la puissance absorbée... (voir les éléments représentés en pointillés à la figure 3), ces éléments restant parfaitement invisibles lorsque l'afficheur est éteint.

Enfin, la transparence de la vitrocéramique permet également de lui faire jouer le rôle de bandeau de commande (évitant l'adjonction d'un bandeau séparé) à l'emplacement non occupé par l'inducteur. Dans un tel cas, il est avantageux d'utiliser des techniques du type "touch-control", ce qui évite de percer la vitrocéramique pour laisser passer un axe de commande. De cette façon, le plan de cuisson reste parfaitement net, sans aucune partie en saillie, et garde une étanchéité parfaite en cas de débordement.

La réalisation d'un inducteur rectangulaire ou carré permettant de réaliser un plan de cuisson conforme à l'invention sera décrite ci-après pour un plan de cuisson ayant une surface de chauffe de trente centimètres par trente centimètres par exemple, l'inducteur étant constitué par un enroulement d'un toron de fils de cuivre émaillés (par exemple trente-deux fils de 0,56 mm de diamètre) enroulés en spirales de forme rectangulaire ou carrée.

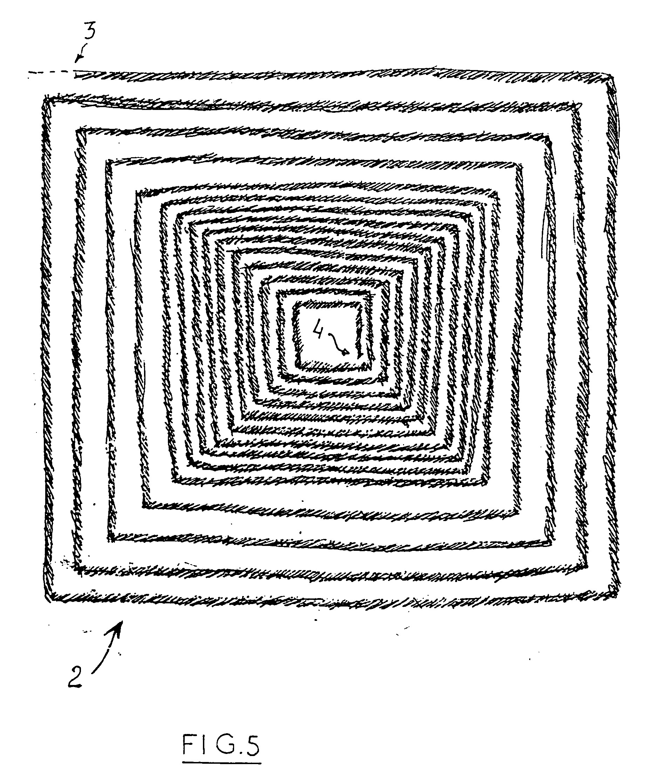

Les figures 4 et 5 illustrent deux types d'inducteurs réalisés pour un tel plan de cuisson conforme à l'invention, ces inducteurs étant en forme de spirales telles que les spires ne soient pas jointives. Le maintien mécanique des spires entre elles est obtenu, par exemple, au moyen d'une résine polymérisable ou un ciment résistant à haute température (au moins 185°C).

Pour un inducteur ayant des dimensions de trente centimètres par trente centimètres, l'enroulement en spirales comporte dix-neuf spires espacées régulièrement entre elles et permettant d'obtenir une puissance de 4000 watts lorsqu'il est couplé à un générateur fonctionnant à 30 kHz environ et alimenté par le secteur de 220 volts à 50-60 Hz.

Les spires n'étant pas jointives, il est donc possible de concentrer la puissance induite à volonté dans certaines zones en diminuant l'écartement entre spires spécialement dans la zone où la puissance la plus forte est souhaitée. En pratique, il est avantageux de renforcer la puissance vers le centre de l'inducteur, car dans cette zone, le champ électromagnétique y est déjà plus intense. Un tel renforcement a pour avantage de chauffer plus rapidement une casserole à fond rond disposée seule sur le plan de cuisson au-dessus de la zone centrale d'un inducteur rectangulaire ou carré. La conséquence intéressante de ce renforcement central réside en ce que la puissance de chauffe diminue de manière progressive lorsque l'on déplace l'ustensile du centre vers les sommets du rectangle ou du carré. On a donc ainsi un moyen simple de faire varier la puissance de chauffe en déplaçant simplement l'ustensile du centre vers les sommets ou vice-versa.

La figure 5 illustre une variante d'un inducteur permettant un renforcement plus important du champ électromagnétique en zone centrale dans laquelle les spires sont beaucoup plus rapprochées les unes des autres que dans la zone externe.

Il est donc possible, lorsque plusieurs casseroles doivent être chauffées simultanément, de différencier la puissance de chauffe dans chacune d'entre elles en disposant vers le centre celle qui doit être chauffée rapidement et vers les sommets celles qui doivent être en mijotage. Si toutes les casseroles sont en mijotage, la zone centrale reste libre naturellement par la mise côte à côte desdites casseroles comme cela ressort de la figure 3 annexée où quatre casseroles (5) ont été représentées.

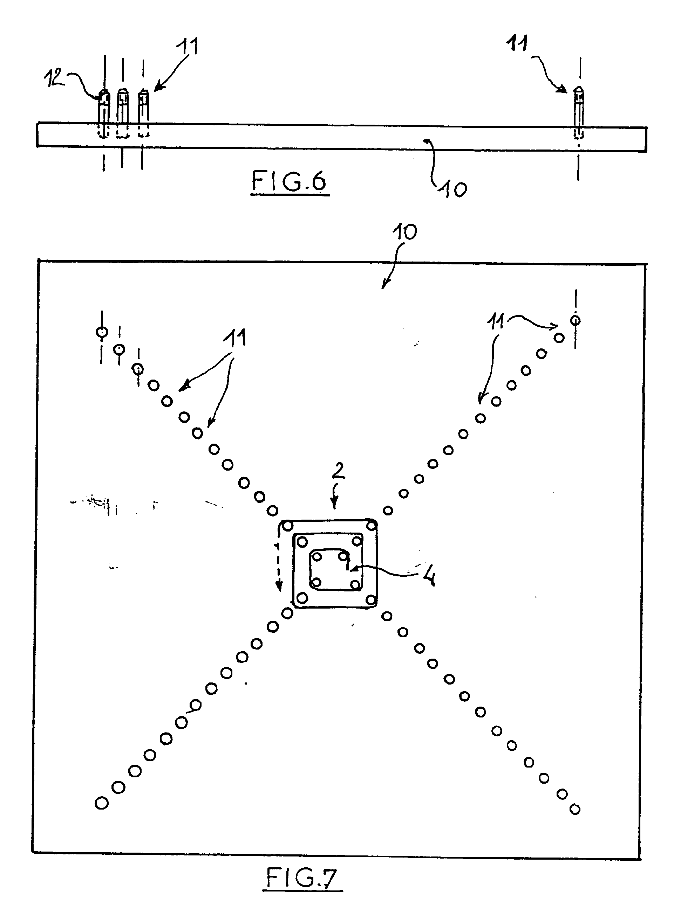

La réalisation de tels inducteurs rectangularies ou carrés peut être réalisée de manière simple de la façon suivante au moyen d'un outillage simple tel qu'illustré par les figures 6 et 7.

Un tel outillage est constitué essentiellement d'une plaque plane (10) (en métal, acier ou aluminium par exemple), dont la surface est supérieure à celle de l'inducteur à construire et sur laquelle sont fixés des goujons (11), perpendiculaires à ladite plaque, et disposés au sommet de chaque spire qui constituera l'inducteur. Le toron est disposé avec une certaine tension, du centre vers la périphérie par exemple, et entoure donc chaque goujon suivant un angle sensiblement droit. Lorsque le bobinage est réalisé, on dispose une bordure périphérique sur le tour de la plaque délimitant un périmètre légèrement supérieur à celui de l'inducteur et on coule à l'intérieur du moule ainsi formé une résine polymérisable. Lorsque la résine est coulée, une plaque supérieure servant de couvercle est disposée et boulonnée sur des filetages (12) que comportent les extrémités des goujons (11). Cette plaque supérieure permet de conserver la planéité du bobinage et évite tout débordement de la résine lors des manipulations. L'ensemble étant alors fermé, est alors placé en étuve pour réaliser la polymérisation rapidement.

Après polymérisation, l'ensemble est démoulé, le couvercle étant enlevé, en soulevant l'inducteur verticalement de la plaque inférieure (10). L'outillage peut alors être réutilisé pour la fabrication d'un nouvel inducteur.

Bien entendu, il pourrait être envisagé d'utiliser des outillages perdus faisant partie intégrante de l'inducteur mais il est alors impératif d'utiliser à la place de plaques métalliques des plaques à base d'un matériau isolant (fibrociment, mica, résine renforcée d'une fibre de verre..).

L'inducteur ainsi réalisé est monté de la manière décrite précédemment à l'intérieur d'une plaque support (13) en matière isolante et est maintenu sur sa base inférieure par des barrettes également en matière isolante (20). Sur le dessus de cette plaque, on dispose la couche de mica (14), la couche de tissu (15) et enfin la vitrocéramique transparent (12) après, bien entendu, avoir éventuellement appliqué un motif décoratif soit en surface du tissu (15) soit sous le dessous de la plaque en vitrocéramique (12).

Bien entendu, le plan de cuisson peut, comme dit précédemment, comporter non pas un seul inducteur mais une pluralité d'inducteurs disposés à l'intérieur de la plaque isolante (13) et séparés les uns des autres pour définir des zones de cuisson distinctes.

## Revendications

1. Plan de cuisson électrique pour appareil à chauffage à induction, constitué d'une plaque (12) servant de support à des ustensiles métalliques, ladite plaque étant en matériau non métallique, et montée sur un support isolant (13) qui comporte un logement à l'intérieur duquel est disposé un inducteur (2) relié à un convertisseur (1) adapté pour être raccordé au secteur 220 volts 50 Hz ou 60 Hz et qui délivre dans ledit inducteur (2) un courant à la fréquence de 25 à 30 kHz, ledit inducteur (2) étant constitué par un bobinage à spirales planes d'une tresse à base de brins de cuivre isolés et dont les sorties sont reliées au convertisseur (1), caractérisé en ce que :
   – la plaque (12) servant de support aux ustensiles est à base d'une vitrocéramique transparente et a les mêmes dimensions que le support isolant (13), le support isolant (13) comportant plusieurs logements si le plan comporte plusieurs inducteurs ;
   – entre le support (13) et la plaque (12), est intercalé un complexe intermédiaire (14,15), adapté pour masquer l'intérieur de l'appareil à la vue de l'utilisateur et pour améliorer par ailleurs la sécurité dans le cas de bris éventuels de la plaque vitrocéramique ;
   – la plaque (12), le support (13) et le complexe intermédiaire (14,15) sont disposés à l'intérieur d'un cadre (17) et sont maintenus dans ce dernier par un joint périphérique (16) ;
   – les éléments de décoration ou de marquage que comporte le plan de cuisson sont réalisés en dessous de la plaque (12) et sont donc protégés de l'abrasion résultant des nettoyages ou des frottements exercés par les déplacements des ustensiles contre la face supérieure de la vitrocéramique.

2. Plan de cuisson électrique selon la revendication 1, caractérisé en ce que le complexe intermédiaire (15) est constitué d'une feuille de mica (14) recouverte elle-même d'une couche de tissu de verre (15) à mailles serrées, le tissu étant disposé contre la face inférieure de la plaque (12).

3. Plan de cuisson selon la revendication 2, caractérisé en ce que les éléments de décor et/ou de marquage délimitant l'emplacement du ou des inducteurs sont réalisés sur la surface du tissu de verre (15) et/ou sur la face envers de la plaque (12) en regard dudit tissu de verre (15).

4. Plan de cuisson selon la revendication 3, caractérisé par le fait que le tissu de verre (15) a une maille telle que la lumière produite côté intérieur soit visible de l'extérieur à travers la plaque en vitrocéramique transparente (12), permettant ainsi un affichage signalant la température ou une puissance absorbée.

5. Plan de cuisson selon l'une des revendications 1 à 4, caractérisé en ce que l'inducteur (2) est réalisé à spires non jointives et ce, de telle sorte que la spirale plane obtenue ait une forme rectangulaire (ou carrée) dont la surface n'est que légèrement inférieure à la surface totale de l'appareil et permettant ainsi de chauffer soit simultanément une pluralité d'ustensiles à fond rond soit de grands ustensiles de forme ovale ou rectangulaire (plats à poisson, plats à grillades en fonte).

6. Plan de cuisson selon la revendication 5, caractérisé par le fait que l'inducteur rectangulaire ou carré (2) présente une zone centrale de chauffe à puissance plus forte qu'à la périphérie.

7. Plan de cuisson selon la revendication 5, caractérisé en que l'espacement de chacune des spires de l'inducteur (2) est constant.

8. Plan de cuisson selon la revendication 6, caractérisé en ce que l'espacement entre les spires de l'inducteur (2) est plus faible dans la partie centrale qu'à la périphérie, permettant ainsi de renforcer la puissance au centre.

9. Plan de cuisson selon l'une des revendications 1 à 8, caractérisé par le fait que le maintien des spires de l'inducteur (2) est obtenu en noyant l'enroulement formé à l'intérieur d'une résine polymérisable.

**Patentansprüche**

1. Elektrisches Kochfeld für Geräte mit Induktionsbeheizung bestehend aus einer Platte (12), auf die metallisches Geschirr aufgesetzt wird, die aus nicht metallischem Material besteht und auf einer isolierenden Unterlage (13) montiert ist, welche eine Aufnahmeöffnung aufweist, in der ein Induktur (2) angeordnet ist, der an einen Wandler (I) angeschlossen ist, welcher für den Anschluß an ein 220 V, 50 Hz oder 60 Hz Stromnetz ausgelegt ist und dem Induktor (2) einen Strom mit einer Frequenz von 25 bis 30 kHz zuführt, wobei der Induktor (2) aus einer ebenen Spiralwicklung aus einer Litze aus isolierten Kupferdrähten gebildet ist, wovon die Ausgänge mit dem Wandler (I) verbunden sind, dadurch gekennzeichnet, daß:

— die Platte (12), auf die das Geschirr aufgesetzt wird, aus transparenter Glaskeramik besteht und die gleichen Maße wie die isolierende Unterlage (13) hat, wobei die isolierende Unterlage (13) mehrere Aufnahmeöffnungen aufweist, weu das Kochfeld mehrere Induktoren umfaßt;

— zwischen der Unterlage (13) und der Platte (12) eine komplexe Zwischenlage (14, 15) eingefügt ist, die den Blick des Benutzers auf das Innere des Gerätes verdeckt und außerdem die Betriebssicherheit im Falle von eventuellen Brüchen in der Glaskeramikplatte erhöht;

— die Platte (12), die Unterlage (13) und die komplexe Zwischenlage (14, 15) im Inneren eines Rahmens (17) angeordnet und darin von einer umlaufenden Dichtung (16) gehalten sind;

— Dekorationselemente oder Markierungen des Kochfeldes unter der Platte (12) angebracht und daher gegen Abrieb geschützt sind, welcher aus Reinigung oder aus Reibung durch Verschieben des Geschirrs auf der oberen Fläche der Glaskeramik resultiert.

2. Elektrisches Kochfeld nach Anspruch 1, dadurch gekennzeichnet, daß die Zwischenlage (15) aus einer Glimmerfolie (14) gebildet ist, die mit einer Schicht aus engmaschiger Glaswirkware (15) abgedeckt ist, welche gegen die untere Fläche der Platte (12) angeordnet ist.

3. Kochfeld nach Anspruch 2, dadurch gekennzeichnet, daß die Dekorationselemente und/oder die Markierungen, die die Einbaustelle des oder der Induktoren umgrenzen, auf der Oberfläche der Glaswirkware (15) und/oder auf der unteren Fläche der Platte (12), der Glaswirkware (15) gegenüber, aufgebracht sind.

4. Kochfeld nach Anspruch 3, dadurch gekennzeichnet, daß die Glaswirkware (15) solche Maschen aufweist, daß auf der inneren Seite produziertes Licht durch die durchsichtige Glaskeramikplatte (12) hindurch von außen sichtbar ist, was eine Anzeige der Temperatur oder der aufgenommenen Leistung erlaubt.

5. Kochfeld nach einem der Ansprüche 1 bis 4, dadurch gekennzeichnet, daß der Induktor (2) derart aus nicht aneinanderstoßenden Windungen ausgeführt ist, daß die ebene Spirale eine rechteckige (oder quadratische) Form hat, deren Oberfläche nur wenig kleiner ist als die Gesamtoberfläche des Gerätes, so daß entweder gleichzeitig eine Mehrzahl von Geschirren mit rundem Boden oder große Geschirre von ovaler oder rechteckiger Form (Fischplatten, gußeiserne Grillplatten) erhitzt werden können.

6. Kochfeld nach Anspruch 5, dadurch gekennzeichnet, daß der rechteckige oder quadratische Induktor (2) eine zentrale Heizzone aufweist, die eine größere Leistung hat als die Außenzone.

7. Kochfeld nach Anspruch 5, dadurch gekennzeichnet, daß der Abstand der einzelnen Windungen des Induktors (2) konstant ist.

8. Kochfeld nach Anspruch 6, dadurch gekennzeichnet, daß der Abstand zwischen den Windungen des Induktors (2) in der zentralen Zone geringer ist als in der Außenzone, was ein Verstärken der Leistung im Zentrum erlaubt.

9. Kochfeld nach einem der Aisprüche 1 bis 8, dadurch gekennzeichnet, daß der Halt der Windungen des Induktors (2) durch Einbetten der gebildeten Wicklung in einen polymerisierbaren Harz erzielt wird.

**Claims**

1. Electric cooking point for apparatus heating by induction composed of a plate (12) serving as a support for metallic utensils, this plate being of a non-metallic material, and mounted on an insolating support (13) comprising a seating inside which is arranged and inductor (2) linked to a converter (1) adapted to be connected to the 220-volt, 50-Hz or 60-Hz mains supply, and which supplies a current of a frequency of 25 to 30 kHz in the said induct (2), the said inductor (2) comprising a coil of flat spirals in a braid composed of insulated copper fibers, the outputs of which are connected to the generator (1), **characterized** in that:

– the plate (12) serving as support to the utensils is based on a transparent glass-ceramic having the same size as the insolating support (13), said insulating support (13) comprising several seatings if the point comprises several inductors ;

– between the support (13) and the plate (12) there is arranged an intermediate complex (14,15) enabling the inside of the apparatus to be hidden from the view of the user, and furthermore improving the safety, in the event of any breaks in the glass-ceramic plate ;

– the plate (12), the support (13) and the intermediate complex (14,15) are arranged inside a frame (17) and hold in the latter by means of an edge joint (16) ;

– the decoration or marking elements of the cooking point are located below the plate (12) and are thus protected from the abrasion which results from cleaning or rubbing caused by moving utensils against the upper surface of the glass-ceramic.

2. Electric cooking point according to the claim 1, characterized in that the intermediate complex (6) comprises a mica sheet (14) which is itself covered by a layer of small-mesh glass fabric (15), the fabric being arranged against the lower surface of the plate (12).

3. Cooking point according to the claim 2, characterized in that the decorative and/or marking elements defining the location of the inductor or inductors are located on the surface of the glass fabric (15) and/or on the reverse surface of the plate (12) with respect to the said glass fabric (15).

4. Cooking point according to the claim 3, characterized by the fact that the glass fabric (15) has mesh such that the light produced on the inside is visible from the outside through the transparent glass-ceramic plate (12), thus permitting a display showing the temperature or power consumption.

5. Cooking point as claimed in one of claims 1 to 5, characterized in that the inductor (2) is in the form of non-contiguous spirals, in such a manner that the flat spiral obtained has a rectangular (or square) shape, the surface of which is only slighly below to the total surface of the apparatus, thus enabling heating either a plurality of round-bottomed utensils simultaneously or large utensils which are oval or rectangular in shape (fish pans, cast iron broilers).

6. Cooking point according to the claim 5, characterized by the fact that the rectangular or square inductor (2) has a central heating area of higher power than that at the edge.

7. Cooking point according to the claim 5, characterized in that the spacing of each of the spirals of the inductor (2) is regular.

8. Cooking point according to the claim 6, characterized in that the spacing between the spirals of the inductor (2) is smaller in the central part than at the edge, thus enabling the power at the center to be increased.

9. Cooking point as claimed in one of claims 1 to 8, characterized by the fact that the spirals of the inductor (2) are held by embedding the winding formed inside a polymerisable resin.

FIG.1

FIG.4

FIG.2

FIG.3

FIG.5

FIG.6

FIG.7